# EUROPÄISCHE PATENTANMELDUNG

(11) **EP 2 026 442 A2**
(43) Veröffentlichungstag der Anmeldung: **18.02.2009**
(21) Anmeldenummer: 08007951.0
(22) Anmeldetag: 24.04.2008
(51) Int. Cl.: H02J 7/35

(54) **Ladegerät für Kleinststromverbaucher**

(30) Priorität: 14.08.2007 DE 202007011384 U
(71) Anmelder: SOLARWORLD AKTIENGESELLSCHAFT, 53113 Bonn (DE)
(72) Erfinder: Asbeck, Frank, H., 53173 Bonn (DE); Schmidt, Michael, J., 53127 Bonn (DE)
(74) Vertreter: Grünecker, Kinkeldey, Stockmair & Schwanhäusser Anwaltssozietät

(57) **Zusammenfassung**

Die Erfindung bezieht sich auf ein Ladegerät für Kleinststromverbraucher, wie Mobiltelefone oder dergleichen, mit einem Stecker zum Verbinden mit einem Speisenetz, einem Gehäuse zum Unterbringen der Ladeelektronik und einem Ladekabel zum Verbinden mit dem Kleinststromverbraucher, wobei der Stecker mit einer Seite des Gehäuses fest verbunden ist. Um ein Ladegerät der eingangs genannten Art zur Verfügung zu stellen, welches das Laden des Kleinststromverbrauchers auch dann erlaubt, wenn ein entsprechendes Speisenetz nicht zur Verfügung steht, ist vorgesehen, dass eine andere Seite des Gehäuses mit einem Fotovoltaikelement versehen ist, das an die Ladeelektronik angeschlossen ist.

## Beschreibung

Die Erfindung bezieht sich auf ein Ladegerät für Kleinststromverbraucher, wie Mobiltelefone oder dergleichen, mit einem Stecker zum Verbinden mit einem Speisenetz, einem Gehäuse zum Unterbringen der Ladeelektronik und einem Ladekabel zum Verbinden mit dem Kleinststromverbraucher, wobei der Stecker mit einer Seite des Gehäuses fest verbunden ist.

Solche Ladegeräte sind üblicherweise für das 220 Volt- bzw. 110 Volt-Speisenetz vorgesehen. Im Gehäuse ist in der Regel ein Trafo sowie eine Ladeelektronik vorgesehen. Es gibt solche Ladegeräte allerdings auch für 12/24 Volt-Speisenetze, z.B. Bordnetze eines Kraftfahrzeugs oder dergleichen.

Obwohl sich diese Ladegeräte durchgesetzt haben, weil sie in der Handhabung einfach und unkompliziert sind, bergen sie den Nachteil in sich, dass sie nur für bestimmte Netze eingesetzt werden können und ein Betrieb des Kleinststromverbrauchers dann, wenn ein entsprechendes Speisenetz nicht zur Verfügung steht, nicht erfolgen kann.

Es ist daher Aufgabe der vorliegenden Erfindung, ein Ladegerät der eingangs genannten Art zur Verfügung zu stellen, welches das Laden des Kleinststromverbrauchers auch dann erlaubt, wenn ein entsprechendes Speisenetz nicht zur Verfügung steht.

Diese Aufgabe wird erfindungsgemäß dadurch gelöst, dass eine andere Seite des Gehäuses mit einem Fotovoltaikelement versehen ist, das an die Ladeelektronik angeschlossen ist.

Diese Lösung hat den Vorteil, dass auch dann, wenn ein entsprechendes Speisenetz nicht zur Verfügung steht, das Ladegerät über Solarstrom gespeist werden kann und somit den Kleinststromverbraucher aufladen kann. Zwar wird der Ladestrom möglicherweise geringer sein und daher das Aufladen des Kleinststromverbrauchers länger dauern; in der Regel ist aber ein sofortiger Betrieb des Mobiltelefons oder anderer Kleinststromverbraucher möglich, so dass dem Benutzer in entsprechenden Notsituationen sofort geholfen ist.

Gemäß einer bevorzugten Ausführungsform der Erfindung ist der Stecker außermittig der Längserstreckung einer Seite angebracht, wobei das Fotovoltaikelement auf der dem Stecker gegenüber liegenden Seite des Gehäuses angeordnet ist. Durch diese Anordnung kann das Gehäuse des Ladegerätes auf der steckerseitigen Seite aufgelegt werden, wodurch das Fotovoltaikelement schräg ausgerichtet ist, vorzugsweise in einem Winkel von 25-30°. Auf diese Weise ist es möglich, das Fotovoltaikelement dem Sonnenstand so nachzuführen, dass ein möglichst hoher Wirkungsgrad erreicht wird.

Günstig ist dabei, wenn die Seite durch das Fotovoltaikelement nahezu vollständig abgedeckt ist.

Besonders bevorzugt wird, wenn die entsprechende Gehäuseseite durch das Fotovoltaikelement selbst gebildet ist.

Als besonders günstig hat sich herausgestellt, wenn in dem Gehäuse zusätzlich ein Akku als Zwischenspeicher vorgesehen ist. Das Fotovoltaikelement ist über die Ladeelektronik mit dem Akku verbunden, so dass der Ladestrom über das Fotovoltaikelement nicht nur fließt, wenn der Kleinststromverbraucher an das Ladegerät angeschlossen ist, sondern unabhängig davon. Das ermöglicht es, dass auch bei einem weniger leistungsstarken Fotovoltaikelement das Ladegerät bzw. der als Zwischenspeicher vorgesehene Akku vorgeladen wird, so dass der eigentliche Ladevorgang des Kleinststromverbrauchers entsprechend schnell erfolgt.

Im übrigen ermöglicht ein solcher Akku als Zwischenspeicher auch, dass man ein Handy aufladen kann, wenn weder ein Speichernetz zur Verfügung steht, noch ausreichend Licht vorhanden ist.

Eine weitere Ausführungsform sieht vor, dass eine Seite des Gehäuses aufklappbar ist und das Fotovoltaikelement an den Innenflächen der aufklappbaren Seite des Gehäuses angeordnet ist. Dadurch wird die Fläche des Fotovoltaikelements vergrößert. Zudem ist das Fotovoltaikelement bis zum Einsatz in dem Gehäuse angeordnet und wird somit geschützt.

Zweckmäßigerweise kann auch vorgesehen werden, dass das Ladegerät eine Anschlussbuchse zum Aufnehmen von Gleichstromleitungen aufweist. Diese Anschlussbuchse und das Ladekabel sind vorzugsweise symmetrisch an einer Seite des Gehäuses angeordnet. Die Anschlussbuchse kann durch einen Gumminippel verschlossen und vor eindringender Feuchtigkeit und vor Staub geschützt werden. Durch diese Anschlussbuchse wird es möglich, weitere Geräte, wie z.B. einen MP3-Player, mit diesem Ladegerät zu betreiben. Die weiteren Geräte werden dann einfach über Adapter oder Kabel an die Anschlussbuchse des Ladegeräts angeschlossen.

Noch eine weitere Ausführungsform sieht vor, dass der Stecker als Klappstecker ausgebildet ist und aus einer Transportposition, in der die Stifte des Steckers benachbart zum Gehäuse angeordnet sind, in eine Ladeposition klappbar ist, in welcher die Stifte des Steckers von dem Gehäuse weg weisen. Dadurch wird der Platzbedarf des Ladegeräts in der Transportposition verringert und die Stifte des Steckers werden geschützt.

Ein besonders guter Schutz des Steckers, bzw. der Stifte des Steckers, kann dadurch erreicht werden, dass in dem Gehäuse eine Vertiefung zur Aufnahme des Klappsteckers in der Transportposition vorgesehen ist. In der Transportposition fluchtet die Außenseite des Steckers vorzugsweise mit der Gehäuseaußenseite. Der Stecker wird also in der Transportposition an drei Seiten von dem Gehäuse umschlossen und ist daher besonders gut geschützt. Zudem wird der Platzbedarf weiter verringert.

In einer besonders bevorzugten Ausführungsform ist vorgesehen, dass der Klappstecker über einen Bereich von etwa 180° schwenkbar und in verschiedenen Betriebspositionen einrastbar ist. Beispielsweise ist eine erste Betriebsposition möglich, in der der Stecker mit der Unterseite des Gehäuses, d.h. der Seite des Gehäuses, die gegenüber des Fotovoltaikelements liegt, einen 90°-Winkel einschließt. In dieser ersten Betriebsposition kann das Ladegerät auf dem Stecker aufgeständert werden, so dass das Fotovoltaikelement schräg ausgerichtet ist und einen Winkel von etwa 25° - 30° mit der Horizontalen einschließt. Die erste Betriebsposition des Steckers ist also besonders für den Fotovoltaik-Ladevorgang geeignet.

In einer zweiten Betriebsposition könnte der Stecker weiter ausgeklappt werden, so dass er von einer Stirnseite des Gehäuses nach außen vorsteht und mit der Gehäuseunterseite einen Winkel von 180° einschließt. Diese zweite Betriebsposition ist besonders für einen Netz-Ladevorgang geeignet, da das Ladegerät platzsparend in eine Steckdose gesteckt werden kann.

Im folgenden werden Ausführungsbeispiele der Erfindung anhand einer Zeichnung näher erläutert. Es zeigen:
- Fig. 1: ein Ladegerät in einer ersten Ausführungsform aus einer perspektivischen Ansicht,
- Fig. 2: das Ladegerät aus Fig. 1 in einer Seitenansicht,
- Fig. 3: das Ladegerät aus Fig. 1 in einer Draufsicht,
- Fig. 4: ein Ladegerät gemäß einer weiteren Ausführungsform in einer perspektivischen Ansicht,
- Fig. 5: das Ladegerät aus Fig. 4 in einer Seitenansicht,
- Fig. 6: das Ladegerät aus Fig. 4 in einer Draufsicht,
- Fig. 7: ein Ladegerät gemäß noch einer weiteren Ausführungsform in einer perspektivischen Ansicht,
- Fig. 8: das Ladegerät aus Fig. 7 in einer Seitenansicht,
- Fig. 9: das Ladegerät aus Fig. 7 in einer Draufsicht,
- Fig. 10: ein Ladegerät gemäß einer weiteren Ausführungsform,
- Fig. 11: ein weiteres Ladegerät gemäß einer anderen Ausführungsform,
- Fig. 12: ein Ladegerät gemäß noch einer anderen Ausführungsform, und
- Fig. 13a - 13e: verschiedene Ansichten eines Ladegeräts mit einem klappbaren Stecker.

Wie aus der Zeichnung zu ersehen ist, besteht das Ladegerät im wesentlichen aus einem Gehäuse 1, welches im vorliegenden Fall quaderförmig ausgebildet ist und einem Stecker 2, sowie einem Ladekabel 3. Der Stecker 2 ist an einer der Hauptseiten des Quaders fest angebracht, so dass der Stecker 2 zusammen mit dem Gehäuse 1, welches zugleich auch das Steckergehäuse bildet, in die Steckdose eines 220/110 Volt-Speisenetzes eingesteckt wird. Im Gehäuse 1 selbst ist nicht näher dargestellt, ein an sich bekanntes Netzteil und eine Ladeelektronik untergebracht. Die Verbindung zu einem Kleinststromverbraucher, im vorliegenden Fall ein Mobiltelefon, erfolgt in üblicher Weise mit einem Ladekabel 3, an dessen Ende ein verbraucherspezifischer Steckverbinder oder auch ein Universalsteckverbinder vorgesehen ist.

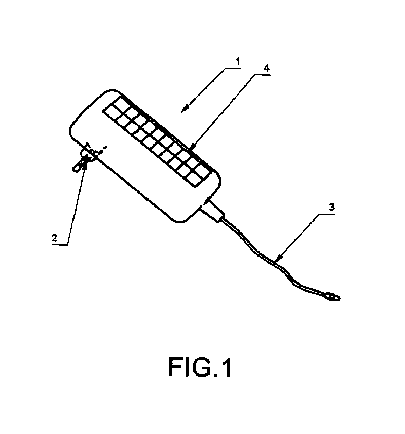

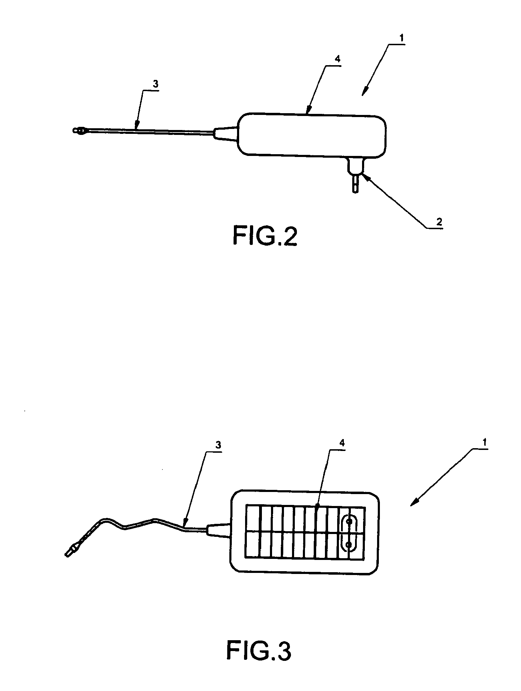

Bei der in den Fig. 1 bis 3 dargestellten ersten Ausführungsform ist auf der dem Stecker 2 gegenüberliegenden Hauptseite des Gehäuses ist ein Fotovoltaikelement 4 vorgesehen. Dieses Fotovoltaikelement 4 nimmt im wesentlichen die gesamte Seite des Gehäuses 1 ein. Im vorliegenden Fall ist die entsprechende Seite des Gehäuses 1 sogar durch das Fotovoltaikelement 4 selbst gebildet. Durch die außermittige Anordnung des Steckers 2 auf einer der Hauptseiten des Gehäuses lässt sich erreichen, dass man das Ladegerät dann, wenn es nicht in eine Steckdose eingesteckt ist, auf den Stecker aufgeständert werden kann und dabei eine Neigung von ca. 30° einnehmen kann, so dass sich das Fotovoltaikelement zur Sonne ausrichten lässt.

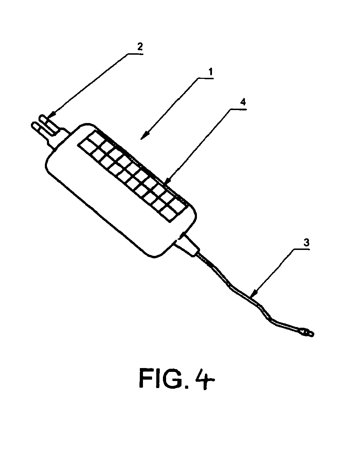

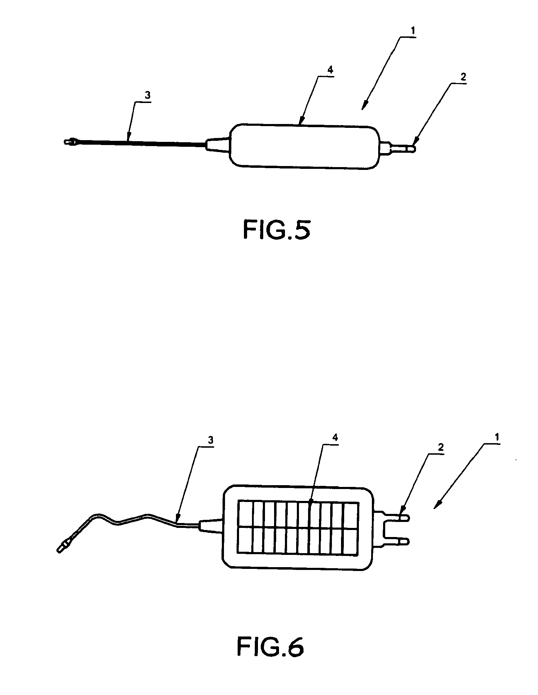

Bei der Ausführungsform gemäß der Fig. 4 bis 6 ist der Stecker auf einer Schmalseite des Gehäuses angeordnet, und zwar auf der dem Ladekabel gegenüber liegenden Seite. Das Fotovoltaikelement ist auf einer Seite angeordnet, die durch die Stecker- bzw. Ladekabelseite begrenzt ist.

Wie in der Zeichnung nicht näher dargestellt ist, ist das Fotovoltaikelement über die Ladeelektronik mit in dem Gehäuse 1 untergebrachten Akkus als Zwischenspeicher verbunden. Diese Zwischenspeicher erlauben es, dass das Aufladen des Mobiltelefons auch bei einer kleineren Fotovoltaikzelle relativ schnell erfolgt, da zunächst der dem Ladegerät untergebrachte Akku entleert wird, der dann über die Solarzelle entsprechend nachgeladen werden kann. Die Anordnung des Steckers an einer Stirnseite bzw. Schmalseite des Gehäuses hat den Vorteil, dass mehrere solcher Ladegeräte in einer Steckerleiste untergebracht werden oder auch in Rasierapparatsteckdosen im Hotel eingesteckt werden können.

Als Akku kann hierbei eine Mignonzelle (Typ AA) oder auch eine Microzelle (Typ AAA) vorgesehen sein. Die Ladeelektronik kann allerdings auch so ausgeführt sein, dass gegebenenfalls Trockenbatterien zum Einsatz kommen können.

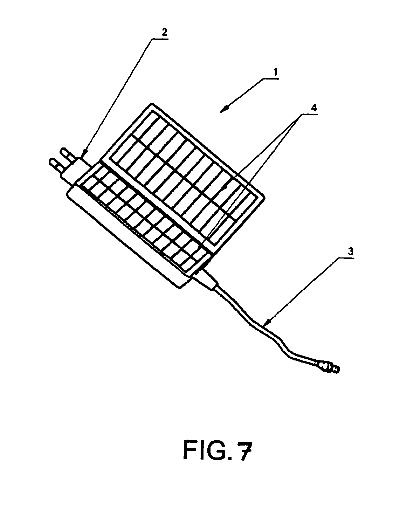

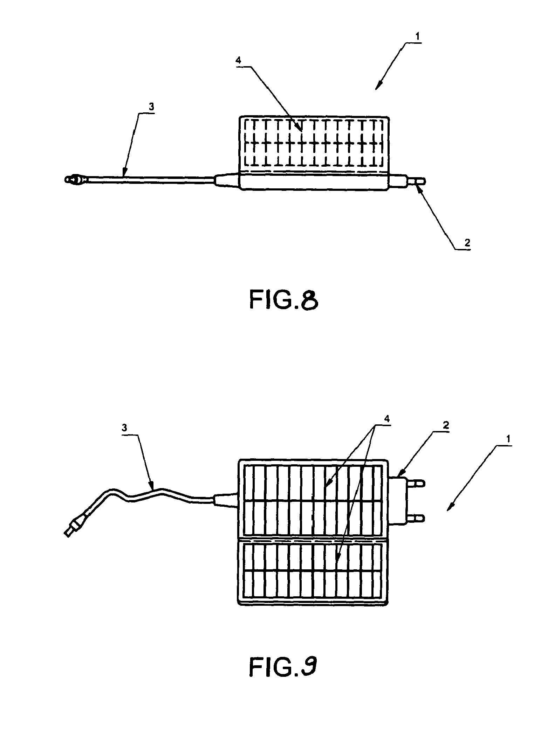

In den Figuren 7 bis 9 ist eine weitere Ausführungsform des Ladegeräts dargestellt. In dieser Ausführungsform ist die Hauptseite des Gehäuses 1, an der das Fotovoltaikelement 4 angebracht ist, ausklappbar und das Fotovoltaikelement 4 ist auf den Innenflächen der ausklappbaren Hauptseite angeordnet. Dadurch wird die Fläche des Fotovoltaikelements 4 verdoppelt. Wird das Fotovoltaikelement 4 nicht benötigt, so ist die Hauptseite zugeklappt und das Fotovoltaikelement vor Stößen, Beschädigungen, etc. geschützt. Der weitere Aufbau des Ladgeräts entspricht den bereits beschriebenen Ausführungsformen.

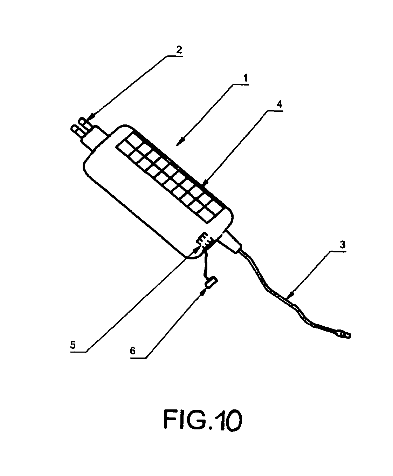

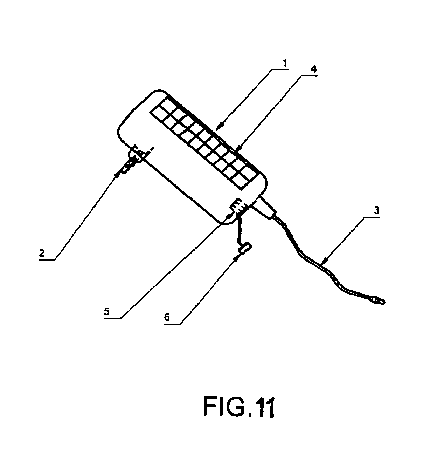

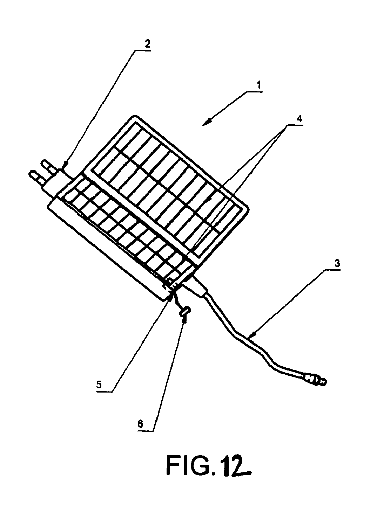

Die in den Figuren 10 bis 12 gezeigten Ausführungsformen entsprechen im Wesentlichen den bereits gezeigten Ausführungsformen, im Folgenden wird daher nur der Unterschied beschrieben.

Wie aus den Figuren 10 bis 12 ersichtlich, weist jedes der dargestellten Ladegeräte zusätzlich zum Ladekabel 3 eine Anschlussbuchse 5 zur Aufnahme von GleichstromLeitungen auf. Das austretende Ladekabel 3 und die Anschlussbuchse 5 sind symmetrisch an einer Schmalseite des Gehäuses 1 angeordnet, so dass das Ladekabel 3 nun nicht mehr mittig aus der Schmalseite des Gehäuses 1 austritt. Die Anschlussbuchse 5 ist durch einen abnehmbaren Gumminippel 6 vor eindringender Flüssigkeit, Staub, etc. geschützt. In die Anschlussbuchse 5 können verschiedene Adapter oder Kabel eingesteckt werden, um mit den Ladegeräten weitere Geräte, z.B. MP3-Player, zu betreiben.

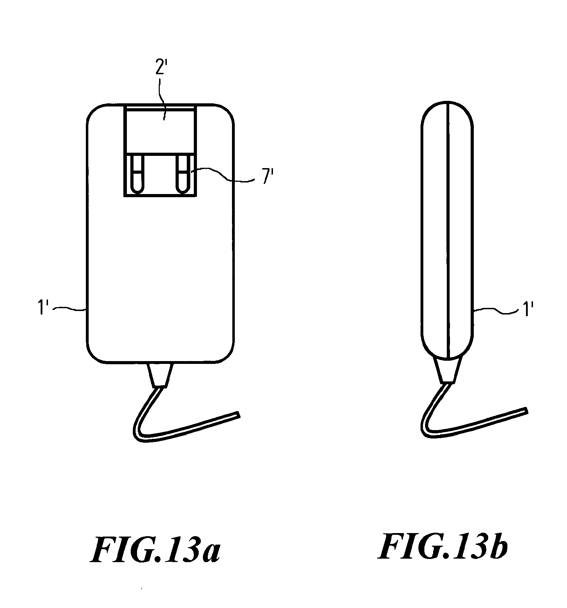

Figuren 13a bis 13e zeigen verschiedene Ansichten einer weiteren Ausführungsform des Ladegeräts. Auch diese Ausführungsform entspricht im Wesentlichen den bereits beschriebenen Ausführungsformen, es werden daher nur die Unterschiede beschrieben.

Fig. 13a zeigt das Ladegerät von unten. An der Unterseite des Gehäuses 1' ist der Stecker 2' fest angebracht, kann also nicht abgenommen, d.h. von dem Gehäuse 1' entfernt werden. Der Stecker 2' ist allerdings so ausgebildet, dass er klappbar ist. Vorzugsweise ist der Stecker 2' dazu über ein Gelenk, bzw. eine Achse mit dem Gehäuse 1' verbunden. Der Stecker 2' ist um dieses Gelenk bzw. die Achse klappbar, und aus einer Transportposition in mindestens eine Betriebsposition überführbar. Dabei ist der Stecker 2' vorzugsweise über einen Bereich von ca. 180° klapp- bzw. schwenkbar. Vorzugsweise ist das Gelenk bzw. die Achse an einer Stirnseite des Gehäuses 1' angeordnet. In Fig. 13a ist die Transportposition des Ladegeräts dargestellt. In der Transportposition ist der Stecker 2' nach innen geklappt, so dass er an der Unterseite des Gehäuses 1' anliegt.

Vorzugsweise ist an der Unterseite des Gehäuses 1' eine Vertiefung 7 angeordnet, in der der Stecker 2' in der Transportposition liegt. Wie in Fig. 13b dargestellt, wird der Stecker 2' in der Transportposition vollständig in der Vertiefung 7 aufgenommen und steht nicht mehr über das Gehäuse 1' vor. Die Außenseite des Steckers 2' fluchtet also mit der Außenseite des Gehäuses 1'. Der Stecker 2' ist in der Transportposition gut geschützt.

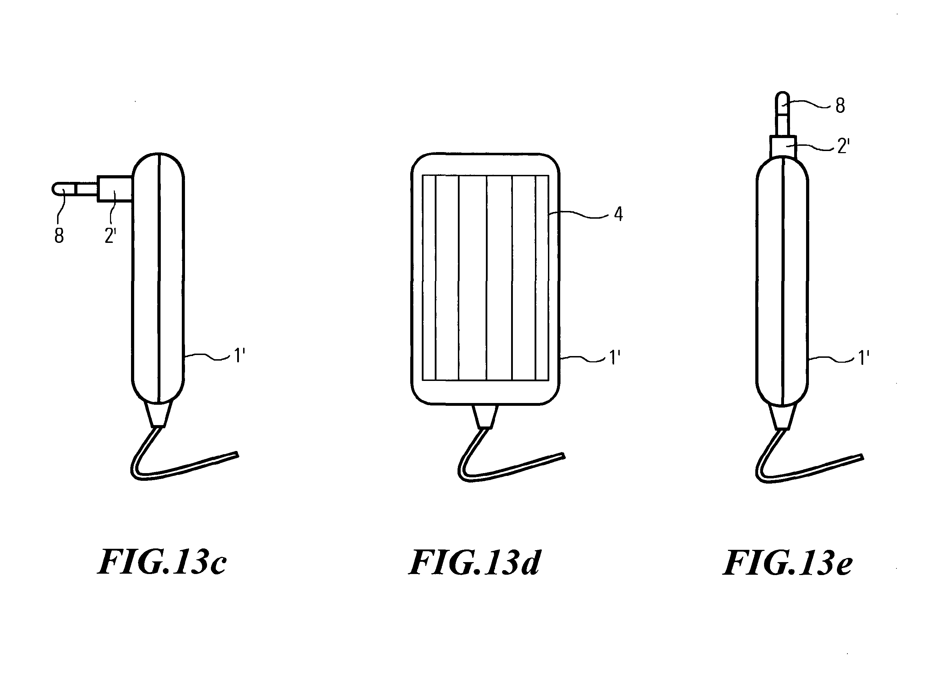

Aus der Transportposition kann der Stecker 2' in eine erste Betriebsposition überführt werden. Dies ist in Fig. 13c dargestellt. Der Stecker 2' wird dazu um das Gelenk bzw. die Achse nach außen geklappt, bis er in einer Ebene liegt, die mit der Unterseite des Gehäuses 1' in etwa einen 90°-Winkel einschließt. Die Stifte 8 des Steckers 2' weisen also vom Gehäuse 1' weg. Vorzugsweise kann der Stecker 2' in dieser Position arretiert werden. In dieser Position kann das Ladegerät gut auf dem Stecker 2' aufgeständert werden, so dass es mit der Horizontalen einen Winkel von ca. 30° einschließt und sich das auf der dem Stecker gegenüberliegenden Seite des Gehäuses 1' angeordnete Fotovoltaikelement (siehe Fig. 13d) zur Sonne ausrichten lässt. Selbstverständlich kann das Ladegerät in dieser ersten Betriebsposition auch in eine Steckdose gesteckt werden.

In Fig. 13e ist eine zweite Betriebsposition des Steckers 2' gezeigt. Um den Stecker 2' in dieser Betriebsposition zu überführen, wird er noch weiter ausgeklappt, bis er wieder in einer Ebene mit dem Gehäuse 1' liegt und die Stifte 8 des Steckers 2' von dem Gehäuse 1' weg weisen. Vorzugsweise lässt sich der Stecker auch in der zweiten Betriebsposition arretieren. In dieser zweiten Betriebsposition des Steckers 2' kann das Ladegerät auch gut in solche Steckdosen eingesetzt werden, in denen wenig Platz ist, z.B. in Steckerleisten.

## Patentansprüche

1. Ladegerät für Kleinststromverbraucher, wie Mobiltelefone oder dergleichen, mit einem Stecker (2) zum Verbinden mit einem Speisenetz, einem Gehäuse (1) zum Unterbringen der Ladeelektronik und einem Ladekabel (3) zum Verbinden mit dem Kleinststromverbraucher, wobei der Stecker (2) mit einer Seite des Gehäuses (1) fest verbunden ist, **dadurch gekennzeichnet, dass** eine andere Seite des Gehäuses (1) mit einem Fotovoltaikelement (4) versehen ist, das an die Ladeelektronik angeschlossen ist.

2. Ladegerät nach Anspruch 1, **dadurch gekennzeichnet, dass** der Stecker außermittig der Längserstreckung einer Seite angebracht ist, wobei das Fotovoltaikelement (4) auf der dem Stecker (2) gegenüberliegenden Seite des Gehäuses (1) angeordnet ist.

3. Ladegerät nach Anspruch 1 oder 2, **dadurch gekennzeichnet, dass** die entsprechende Seite durch das Fotovoltaikelement (4) nahezu vollständig abgedeckt ist.

4. Ladegerät nach einem der Ansprüche 1 bis 3, **dadurch gekennzeichnet, dass** im Gehäuse (1) ein mit dem Fotovoltaikelement (4) wirkungsverbundener Akkumulator als Zwischenspeicher vorgesehen ist.

5. Ladegerät nach einem der Ansprüche 1 bis 4, **dadurch gekennzeichnet, dass** der Stecker (2) an einer Stirnseite des Gehäuses (1) fest angebracht ist.

6. Ladegerät nach einem der Ansprüche 1 bis 5, **dadurch gekennzeichnet, dass** eine Seite des Gehäuses (1) aufklappbar ist und das Fotovoltaikelement (4) an den Innenflächen der aufklappbaren Seite des Gehäuses (1) angeordnet ist.

7. Ladegerät nach einem der Ansprüche 1 bis 6, **dadurch gekennzeichnet, dass** das Ladegerät eine Anschlussbuchse (4) zum Aufnehmen von Gleichstromleitungen aufweist.

8. Ladegerät nach einem der Ansprüche 1 bis 7, **dadurch gekennzeichnet, dass** der Stecker (2') als Klappstecker ausgebildet ist und aus einer Transportposition, in der die Stifte (8) des Steckers (2') benachbart zum Gehäuse (1') angeordnet sind, in eine Betriebsposition klappbar ist, in welcher die Stifte (8) des Steckers (2') von dem Gehäuse (1') weg weisen.

9. Ladegerät nach Anspruch 8, **dadurch gekennzeichnet, dass** in dem Gehäuse (1') eine Vertiefung (7) zur Aufnahme des Steckers (2') in der Transportposition vorgesehen ist.

10. Ladegerät nach Anspruch 8 oder 9, **dadurch gekennzeichnet, dass** der Stecker (2') über einen Bereich von etwa 180° schwenkbar und in verschiedenen Betriebspositionen einrastbar ist.
